# EUROPEAN PATENT APPLICATION

(11) **EP 2 528 179 A1**
(43) Date of publication of application: **28.11.2012**
(21) Application number: 11167886.8
(22) Date of filing: 27.05.2011
(51) Int. Cl.: H02B 7/00, H02B 1/56

(54) **Converter arrangement and method in connection with converter arrangement**

(71) Applicant: ABB Oy, 00380 Helsinki (FI)
(72) Inventor: Koivuluoma, Timo, 01710 Vantaa (FI); Kovanen, Kari, 02230 Espoo (FI); Helosvuori, Juhani, 01620 Vantaa (FI)
(74) Representative: Parta, Ari Petri

(57) **Abstract**

A converter arrangement and a method in connection with the arrangement. In the arrangement, a converter (3) is arranged in a closed container or a similar structure (6), the container (6) having at least two separate compartments (1, 2), the compartments including a high voltage compartment (1) and a low voltage compartment (2), wherein the high voltage compartment (1) includes a transformer (4) connectable to a network to be supplied and the low voltage compartment (2) includes the converter (3). The arrangement comprises means (7) for exchanging heat from the high voltage compartment (1) to the low voltage compartment (2) for heating the low voltage compartment with losses of the transformer (4).

## Description

### FIELD OF THE INVENTION

The present invention relates to a converter arrangement in a container structure containing at least some of the electrical components of the converter, and more particularly to a container structure in which the indoor climate is controlled.

### BACKGROUND OF THE INVENTION

Converters are used in many applications for converting electrical energy from one form to another. Converters are used for example in connection with wind power and solar power. In solar power applications, a converter receives DC voltage from photovoltaic panels and converts it typically to AC voltage. AC voltage is further fed to the network. In some applications, a transformer is also used between the converter and the network. In solar power applications, the converter used for converting the voltage is also called a solar inverter.

In wind power applications, a converter receives electrical power from a rotating generator. The power from the generator is typically AC power, and the converter changes the frequency and the amplitude of the power such that it can be fed to the grid. As in connection with solar inverters, a transformer is often employed between the converter and the grid.

Converters or inverters needed in solar and wind power applications are typically placed in containers or similar simple enclosures. These containers are then placed near the actual power generation points. These containers are thus located outdoors in the fields or open places which are suitable for the generation of power. The containers or enclosures and the electric components inside the enclosures are cooled using heat exchangers or directly with air from outside the enclosure.

For natural reasons, the solar inverter operates cyclically. In the daytime the inverter is in operation, feeding power to the grid. When the sun sets or when the solar panels are not able to generate enough power, the inverter is switched off completely. Also in connection with wind power, the converter supplying the grid is switched off whenever the wind speed is not high enough or is so high that generation of wind power is impossible.

The cyclic operation of the converter causes problems relating to temperature and humidity inside the enclosure. The temperature inside the enclosure varies considerably and the repeated changes in the temperature cause the semiconductor components to wear out prematurely. Further, the humidity inside the container may cause short circuits. The condensed water may also freeze inside the container, which may block the operation of the converter completely.

It is common to use blowers to blow air through the container and the electrical components. The air inside gets cooler as the outside temperature decreases. If humidity is not filtered off the inlet air, the humidity from the air ends up inside the container.

If heat exchangers are used in a traditional way, the heat exchangers transfer heat whenever the outside temperature is lower than the temperature inside the container and a constant amount of air is blown through the exchanger. Owing to changes in the outside temperature, the temperature inside the container varies and the semiconductor lifetime becomes shorter.

If the inside air contains humidity, it may condensate without control in a wrong place. Since containers are not airtight, wet air easily passes inside the containers and the condensed water causes problems which may lead to total breakage of the system.

In very harsh conditions, the temperature inside the container may drop considerably below zero degrees Celsius. Normal electronic components are not specified at temperatures which are near -20°C. It is possible that the equipment does not start or it may become damaged owing to the temperature. In such a case, heating is required inside the container for keeping the temperature within allowed limits.

### BRIEF DESCRIPTION OF THE INVENTION

An object of the present invention is thus to provide a method and an arrangement for implementing the method so as to overcome the above problem. The object of the invention is achieved by a method and an arrangement which are characterized by what is stated in the independent claims. Preferred embodiments of the invention are disclosed in the dependent claims.

The invention is based on the idea of using losses of a transformer in heating electrical parts of a converter situated in a container or a similar structure. The transformer, which feeds power to a network, is not typically separated from the network although it is not feeding power. The transformer is situated inside the container, but since it is a high-voltage device, it is kept in a completely closed part inside the container. This part of the container is closed in such a manner that only a very limited number of service personnel may enter this part owing to safety regulations.

The losses of a high-voltage or medium-voltage transformer keep the transformer warm, and this heat is transferred in the container to the part in which the inverter equipment is situated.

An advantage of the method and arrangement of the invention is that the temperature cycling can be minimized with a very cost effective and preferably with a passive solution. Due to reduced temperature cycling, the expected life times of semiconductor components in the converter structure are longer. Further, since the temperature can be kept at a higher level, the problem relating to humidity is greatly alleviated.

According to an embodiment, for further minimizing the temperature cycling, the heat is stored inside the container in the structures of the converter by raising the temperature during the operation of the converter.

### BRIEF DESCRIPTION OF THE DRAWINGS

In the following, the invention will be described in greater detail by means of preferred embodiments and with reference to the accompanying drawings, in which
Figure 1 shows a block diagram of a photovoltaic power generation system;
Figure 2 shows a cross section of a container having an embodiment of an arrangement of the invention; and
Figure 3 shows an embodiment of the arrangement of the invention;

### DETAILED DESCRIPTION OF THE INVENTION

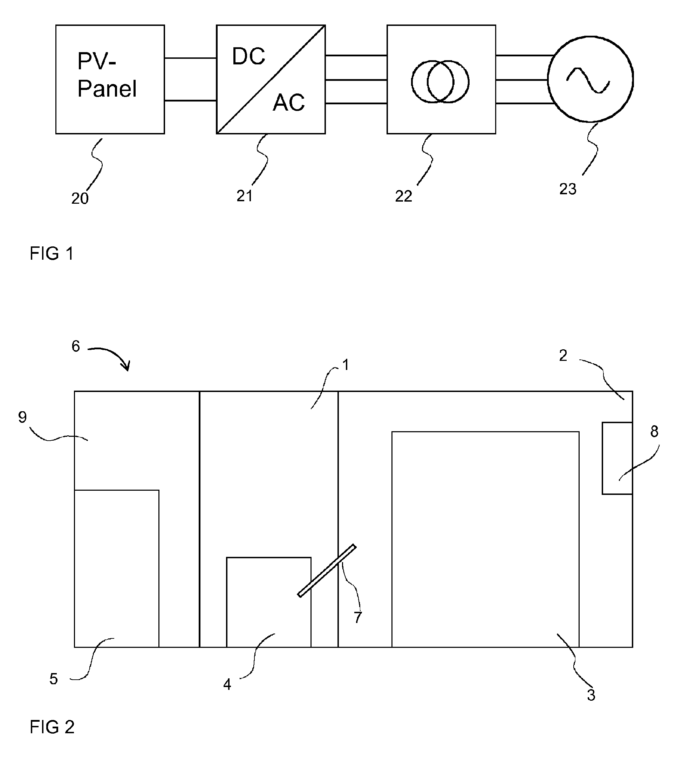

Figure 1 shows a simplified block diagram of a photovoltaic power generation system. A photovoltaic panel or string or array of such panels 20 produces DC voltage to a converter 21. A converter is basically an inverter having possibly multiple converting stages, and in connection with solar power, the converter is often called a solar inverter. The purpose of this converter is to produce AC voltage from the DC voltage obtainable from the solar panel 20. The AC voltage is produced such that its phase and frequency are synchronized with the voltage of a supplied network 23. In the arrangement of the invention, a transformer 22 is used for rising the voltage level of the voltage produced with the converter 22. The transformer is further connected to the transmission network for feeding the generated power to the network.

Usually the high voltage transformers are not disconnected from the network although no power is fed trough the transformer to the network. Decoupling of the transformer from the network is a rough operation, producing arcing and wearing down the components dramatically. The switches have a limited number of disconnections which they can withstand. Although no current is flowing through the transformer, the transformer has some losses which keep the transformer warm. These no-load losses mainly consist of hysteresis and eddy-current losses.

Usually the transformer is cooled down by using cooling fins, and the transformer can run at quite a high temperature since it does not have any components that are very sensitive to heat. Figure 2 shows a cross-section of a basic structure of the arrangement of the invention. In the arrangement, a container or a similar closed structure 6 is divided into sections or compartments. A transformer 4 is in one of the compartments 1 and a converter 3 is in another compartment 2. The reason for the transformer being located in a separate closed section is safety regulations, according to which access to high voltage components is restricted. Figure 2 shows another compartment 5 inside the container in which some control electronics and switchgear is situated.

As the transformer is enclosed in the compartment 1, the converter is situated in the compartment 2. The converter and the transformer are naturally electrically connected for feeding power from the converter to the transformer. Further, the transformer 4 is electrically connectable to the transmission network.

According to the invention, the arrangement comprises means for exchanging heat from a high voltage compartment to a low voltage compartment. The purpose of the exchange of heat is to warm the converter structure with the losses of the transformer when the converter is not in operation or is operated with a low load such that the converter is not heating itself.

According to an embodiment, the means for exchanging heat comprises a hatch that can be opened and closed in a controlled manner, and a blower for moving warm air from the high voltage compartment to the low voltage compartment. The hatch can be opened, for example, depending on the temperature of the low voltage compartment or on the basis of a difference between outside and inside temperature of the low voltage compartment. Once the temperature of the low voltage compartment decreases and gets closer to the outside temperature, the hatch is opened and heat from the high voltage compartment is transferred to the low voltage side. If the temperature of the low voltage side can be kept higher than that of the dew point, the humidity should not condense inside the container.

According to another embodiment, the means for exchanging heat comprise a heat exchanger which is especially a thermosyphon-type heat exchanger. An example of this type of heat exchanger is a heat pipe in which liquid in a pipe-like structure evaporates owing to heat and condenses back to liquid, releasing heat. As is well known, these type of heat exchangers are passive and do not require any energy for the operation. However, the efficiency of the heat exchange increases greatly if a small blower is used for circulating air when the heat is released from the tube. Further, the blower circulates the air in the low voltage compartment and thereby the heat is more evenly distributed. Another example of a thermosyphon-type heat exchanger is presented in EP 2031332 A1.

Figure 2 shows how a heat exchanger 7 is situated. A bottom end of the exchanger, such as a heat pipe, is physically connected to a heat source, which in the case of the present invention is the transformer 4. One end of the pipe may be wedged between the cooling fins of the transformer. The cooling fins may be in a form of corrugated metal sheet. When the liquid in the exchanger warms up, it evaporates and travels to the other end of the exchanger. When in the other end, the vapour releases heat and condenses back to liquid. As can be seen, the exchanger goes through a wall between the high voltage and low voltage compartments.

When heating of the low voltage compartment is required, the passive exchanger starts operation by itself. In fact, the operation is continuous since the surface of the transformer is warmer than the air in the low voltage compartment even if the converter is in operation. When a blower is used inside the low voltage compartment for enhancing heat transfer, the blower can simply be turned on when the converter is shut down. A use of heat exchangers that do not move air from one compartment to another is preferred, since it is more energy efficient and since the air in the high voltage compartment may contain impurities that are not desirable in the low voltage compartment. If the air is highly polluted, it may even disturb the operation of the converter.

The amount of heat transfer can be increased by increasing the number of heat exchangers. Since, for example, a heat pipe is merely put into contact with the surface of the transformer, the number of such pipes can be increased easily. The heat pipe does not affect the cooling of the transformer itself. A 1 MW transformer has no-load losses that are in the range of 6 kW, and only a portion of this power is enough to keep the temperature of the low voltage side at an elevated level.

The temperature cycling can be further reduced by using the thermal masses of the converter structure to store heat. This means that the converter is operated at an elevated temperature at least before the shut down, so that heat is stored in the mechanical structures. A converter structure provided in a container may have a mass of 4000 kg. When this mass is heated up it will keep itself warm overnight. The heat may be gathered in the mass by decreasing the cooling of the converter compartment. When the converter is operated, it is cooled with cooling means 8 from the outside air. The cooling means may comprise blowers and hatches, which can be controlled to elevate the temperature to a higher level. It should be noted, however, that the temperature of the converter may not exceed the safe operating temperatures. The cooling means 8 may also be a heat exchanger with a blower. In such a case, no air from the outside of the container is used in the cooling.

The thermal mass can be heated with heat from the transformer by using heat pipes or similar structures. The thermal mass to be heated is situated higher than the end of the heat pipe that is in connection with the transformer. The heat from the transformer is transferred effectively and it keeps the thermal mass at an elevated temperature.

According to an embodiment, the arrangement further comprises a phase change material that is added into the container in the low voltage compartment. The phase change material (PCM) is added to act as thermal mass that is heated to an elevated temperature. Each PCM material has a certain phase change temperature. When this temperature is reached, the material starts changing its phase, keeping the temperature at the same level.

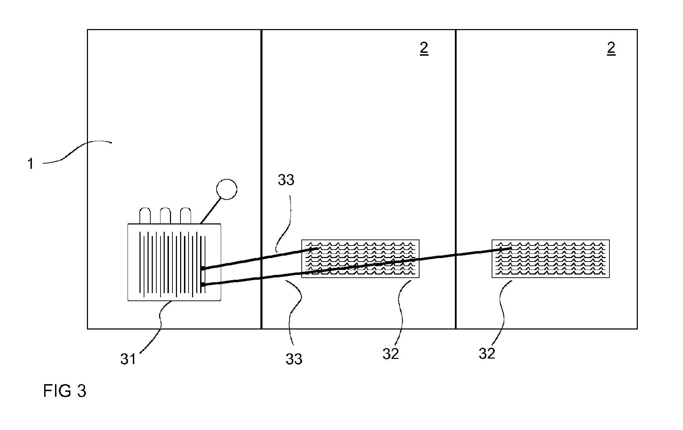

Figure 3 shows another embodiment of the invention. In this embodiment the container is divided into three sections or compartments. A compartment 1 includes a transformer 31 and compartments 2 both include parts of the converter. Figure 3 schematically shows how the heat pipes or similar thermosyphon-like devices can be used for carrying heat to spaces that are located substantially far away from the source of heat. In the example of Figure 3, heat pipes 33 are transferring heat to enclosures 2 that are side by side. The bottom end of the heat pipes is connected to the transformer 31, and the other ends are placed inside separate compartments of the container. Fans 32 or blowers are placed in the compartments 2 for removing the heat from the pipes more efficiently and at the same time for heating the devices in the compartments.

In another embodiment of the invention, the heat from the transformer is transferred to the other compartments by using a heat exchanger with liquid circulation. The circulated liquid stores the heat from the transformer and the heat is delivered to the compartment with the converter. The heat transfer is effectively controlled using a small pump for controlling the flow of liquid in the system. In order to deliver the heat in a more effective way, the heat exchanger includes a radiator such that the heat from the liquid is transferred faster to the air inside the compartment.

According to the method of the invention, the method in connection with the converter arrangement comprises a step of using the heat produced by the transformer in the heating of a separate compartment of the container. Preferably, the heat is used by transferring air from the compartment having the transformer or by using a heat exchanger for exchanging the heat to the low voltage compartment.

Above the invention is described in connection with solar power, the container incorporating the power electronic devices required for extracting the power from the panel and converting the obtained voltage to a three phase voltage for inputting it to a transformer. The invention is not limited to solar systems, but may also be used in connection with wind power and any other possible energy system in which the converter structures are placed in a container together with a transformer.

It will be obvious to a person skilled in the art that the inventive concept can be implemented in various ways. The invention and its embodiments are not limited to the examples described above but may vary within the scope of the claims.

## Claims

1. A converter arrangement, in which arrangement a converter (3) is arranged in a closed container or a similar structure (6), the container (6) having at least two separate compartments (1, 2), the compartments including a high voltage compartment (1) and a low voltage compartment (2), wherein the high voltage compartment (1) includes a transformer (4) connectable to a network to be supplied and the low voltage compartment (2) includes the converter (3), **characterized in that** the arrangement comprises means (7) for exchanging heat from the high voltage compartment (1) to the low voltage compartment (2) for heating the low voltage compartment with losses of the transformer (4).

2. An arrangement according to claim 1, **characterized in that** the means (7) for exchanging the heat from the high voltage compartment (1) to the low voltage compartment (2) are adapted to transfer heat when the converter (3) in the low voltage compartment (2) is not operating or is operated with a low load.

3. An arrangement according to claim 1 or 2, **characterized in that** the means (7) for exchanging the heat comprise a hatch separating the compartments and a blower for transferring air from the high voltage compartment to the low voltage compartment.

4. An arrangement according to claim 1 or 2, **characterized in that** the means (7) for exchanging the heat comprise a thermosyphon-type heat exchanger, such as a heat pipe, which is thermally connected to a surface of the transformer and which extends to the low voltage compartment for heating the low voltage compartment.

5. An arrangement according to any one of the previous claims 1 to 4, **characterized in that** the low voltage compartment comprises controlled cooling means (8), control of which being adapted to keep the temperature of the converter at an elevated level for storing heat in the mechanical structure of the converter.

6. An arrangement according to any one of the previous claims 1 to 5, **characterized in that** the low voltage compartment comprises additional thermal mass, preferably phase change materials, for storing the heat in the low voltage compartment.

7. A method in connection with a converter arrangement, in which arrangement a converter (3) is arranged in a closed container or a similar structure (6), the container (6) having at least two separate compartments (1, 2), the compartments including a high voltage compartment (1) and a low voltage compartment (2), wherein the high voltage compartment (1) includes a transformer (4) connected to a network to be supplied and the low voltage compartment (2) includes the converter (3), **characterized in that** the method comprises the step of
exchanging heat from the high voltage compartment (1) to the low voltage compartment (2) for heating the low voltage compartment with losses of the transformer (4).

8. A method according to claim 7, **characterized in that** the step of exchanging heat from the high voltage compartment comprises a step of using a thermosyphon-type heat exchanger, such as a heat pipe, which is thermally connected to a surface of the transformer and which extends to the low voltage compartment for heating the low voltage compartment.

9. A method according to claim 7 or 8, **characterized in that** the low voltage compartment comprises controlled cooling means (8) and the method comprises a further step of controlling the cooling means to keep the temperature of the converter at an elevated level for storing heat in the mechanical structure of the converter.
